# EUROPEAN PATENT SPECIFICATION

(11) **EP 0 367 441 B1**
(45) Date of publication and mention of the grant of the patent: **15.12.1993**
(21) Application number: 89310678.1
(22) Date of filing: 18.10.1989
(51) Int. Cl.: D06N 7/00, B32B 25/10, B29C 43/18, B29C 43/12, B29C 43/04, B29C 43/28, B29D 31/00

(54) **Method for matting**
Verfahren zur Herstellung von gummigebundenen Teppichen
Méthode pour la fabrication de tapis moulé

(30) Priority: 25.10.1988 GB 8824992
(43) Date of publication of application: 09.05.1990
(73) Proprietor: NUFOX DEVELOPMENTS LIMITED, Ashton-under-Lyne, Lancashire OL7 0RA (GB); COLLIE CARPETS LIMITED, Farnworth, Bolton, Lancashire BL4 9TP (GB)
(72) Inventor: Newbould, Derek Mackwell, Macclesfield Cheshire SK10 2HX (GB)
(74) Representative: McNeight, David Leslie

(56) References cited:
- EP-A- 0 264 514
- BE-A- 407 070
- DE-A- 3 008 486
- FR-A- 1 039 678
- FR-A- 2 055 755
- US-A- 4 174 991
- PATENT ABSTRACTS OF JAPAN, vol. 10, no. 83 (M-466)[2140], 2nd April 1986; & J-P-A-60224524.

## Description

This invention relates to the manufacture of rubber-backed mats or carpet.

Such matting is usually made by softening a rubber sheet assembled with a textile fibre mat and compressing the two together between a hot platen and a flexible membrane on the form of an air bag. The arrangement is left under pressure for such time as is required to cure the rubber at its softening temperature. Conventionally, the mat is against the plates and the rubber against the air bag.

We have found, however, that curing times can be very much reduced as compared to this conventional arrangement.

The invention comprises a method for making rubber backed matting comprising placing a rubber sheet/mat assembly between a hot platen and a pressure applying arrangement with the rubber sheet adjacent the hot platen.

The pressure applying arrangement comprises a fluid pressure arrangement in the form of the conventional air bag.

A release material may be placed between the rubber sheet and the hot platen, and the release material may be textured to impart a pattern to the rubber sheet, comprising, for example, a woven glass fibre sheet having a release finish such as polytetrafluoroethylene.

Conventional presses are somewhat complicated affairs in which supports for the air bag and the platen are moved apart to introduce and remove the rubber sheet/mat assembly and moved together to apply the pressure.

The invention can be carried out in an apparatus for making rubber backed matting comprising a hot platen and a pressure applying arrangement comprising a flexible membrane over the platen and adapted to bear down towards the platen whereby to compress together a rubber sheet/mat assembly with the rubber sheet adjacent the hot platen and to maintain a softening/curing temperature for a time sufficient to cure the rubber which has softened and bonded to the mat.

The flexible membrane is a face of an air bag which is situated above the platen and which raises and lowers pneumatically sufficiently to permit the rubber sheet/mat assembly to be inserted between the membrane and the platen. The bag may be evacuable to raise the platen. Rapid evacuation may be effected by a venturi arrangement.

The apparatus may comprise a laying up table adjacent the platen on which a rubber sheet/mat assembly can be prepared and slid from there in between the platen and membrane. Or a belt feed of release material may be arranged to carry the rubber sheet/mat assembly in between the platen and the membrane.

The method for making rubber backed matting according to the invention will now be described with reference to the accompanying drawings, in which :-
- Figure 1: is a side elevation of one apparatus;
and
- Figure 2: is a side elevation of another apparatus.

The drawings illustrate apparatus for making rubber backed matting comprising a hot platen 11 and a pressure applying arrangement 12 comprising a flexible membrane 13 (shown in full line in retracted condition and in broken line in pressure-applying condition) over the platen 11 and adapted to bear down towards the platen 11 whereby to compress together a rubber sheet/mat assembly 14.

The assembly 14 is seen to a larger thickness scale for clarity) on a laying up table 15 prior to being inserted between the platen 11 and the pressure applying arrangement 12 and has the rubber sheet 16 thereof lowermost with the matting 17 on top. Either side of the assembly 14, however, is a release material 18 comprising a ptfe coated woven glass fibre sheet.

The platen is heated, either electrically or by hot fluid via conduits 19, to a softening temperature for the rubber which is pressed, soft, into the fibre mat 17 and then cured under continued heat and pressure. For nitrile rubber a suitable temperature is 150-160°C and a suitable time to cure is 5-10 minutes.

The membrane 13 is one wall of an air bag which is supplied with pressure air through a valve 21 under the control of a process timer 22. A suitable pressure is one atmosphere (above atmospheric, that is). A relief valve 23 is provided to protect against over-inflation, the valve 21 itself being set to cut off the supply of pressed air when the required bag pressure is attained. A further valve 24 is operated, again by the process timer 22, to open when pressure is to be removed, and the valve 21 can again be opened to assist exhaustion of air from the bag and reduce its pressure even somewhat below atmospheric by means of a venturi arrangement 25.

In this way, the membrane 13 is raised sufficiently to permit the hot pressed, cured rubber sheet/mat assembly to be removed from between the membrane 12 and platen 11 without the need for any mechanical elevation of the support for the air bag. Essentially, except for the pneumatically distendable membrane 13, the apparatus comprises no moving parts.

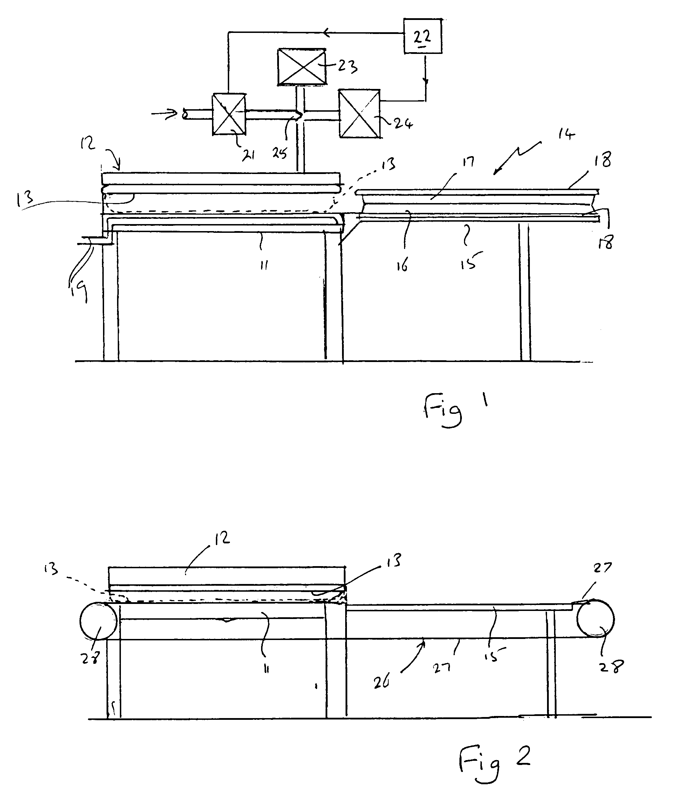

Figure 2 shows an apparatus with a belt feed arrangement 26, the belt 27 being of ptfe coated over glass fibre fabric trained roller 28, one of which can be motor driven under the control of the process timer 22 (Figure 1).

Whilst arrangements have been shown with the air bag on top of a horizontal platen, of course other arrangements in which, for example, the platen may be vertical and the air bag on one side of it, can be envisaged provided suitable arrangements are made for feeding the rubber sheet/mat assembly, and other variations could be introduced without losing the advantages of the invention, primarily seen as a reduction in cycle time because of the faster softening of the rubber by virtue of its adjacency to the platen.

## Claims

1. A method for making rubber backed matting comprising placing a rubber sheet/mat assembly between a hot platen and a pressure applying arrangement with the rubber sheet adjacent the hot platen, wherein said pressure applying arrangement comprises a fluid pressure arrangement in the form of an air bag.

2. A method according to claim 1, in which there is a release material between the rubber sheet and the hot platen.

3. A method according to claim 2, in which the release material is textured to impart a pattern to the rubber sheet.

4. A method according to claim 2 or claim 3, in which the release material comprises a woven glass fibre sheet having a release finish such as p.t.f.e.

## Patentansprüche

1. Verfahren zur Herstellung von mit einem Gummirücken versehenen Matten, bei dem eine Gummihaut/Matten-Anordnung zwischen einer heißen Platte und einer Preßvorrichtung angeordnet wird, wobei die Gummihaut an der heißen Platte anliegt, worin die Preßvorrichtung eine Fluiddruckvorrichtung in Form eines Luftsacks aufweist.

2. Verfahren nach Anspruch 1, bei welchem ein Ablösematerial zwischen der Gummihaut und der heißen Platte angeordnet ist.

3. Verfahren nach Anspruch 2, bei welchem das Ablösematerial strukturiert ist, um der Gummihaut ein Muster zu verleihen.

4. Verfahren nach Anspruch 2 oder 3, bei welchem das Ablösematerial ein Blatt aus Glasfasergewebe mit einer Ablösebeschichtung wie aus PTFE (Polytetrafluorethylen) aufweist.

## Revendications

1. Procédé de fabrication d'un tapis à dossier en caoutchouc, comprenant la mise en place d'un ensemble feuille de caoutchouc/tapis entre une table chauffante et un dispositif d'application d'une pression, la feuille de caoutchouc étant adjacente à la table chauffante, dans lequel ledit dispositif d'application d'une pression comprend un dispositif à pression hydraulique ayant la forme d'un ballon gonflable.

2. Procédé selon la revendication 1, dans lequel un matériau antiadhésif est placé entre la feuille de caoutchouc et la table chauffante.

3. Procédé selon la revendication 2, dans lequel le matériau antiadhésif est texturé pour conférer un motif à la feuille de caoutchouc.

4. Procédé selon la revendication 2 ou 3, dans lequel le matériau antiadhésif comprend une feuille de fibres de verre tissées présentant un apprêt antiadhésif tel que P.T.F.E.
